# EUROPÄISCHE PATENTANMELDUNG

(11) **EP 4 834 538 A1**
(43) Veröffentlichungstag der Anmeldung: **04.11.2026**
(21) Anmeldenummer: 25173554.4
(22) Anmeldetag: 30.04.2025
(51) Int. Cl.: B25J 5/00, B25J 11/00, B25J 13/08, B25J 19/02, B25J 5/04

(54) **BAUROBOTER ZUM BEARBEITEN EINER BODENFLÄCHE**

(71) Anmelder: Hilti Aktiengesellschaft, 9494 Schaan (LI)
(72) Erfinder: Lukic, Sasha, 9470 Buchs (CH); Milito, Claudio, 6822 Schnifis (AT)
(74) Vertreter: Hilti Aktiengesellschaft Corporate Intellectual Property

(57) **Zusammenfassung**

Die Erfindung betrifft einen Bauroboter (10) zum Bearbeiten einer Bodenfläche (12), umfassend eine motorisch antreibbare Fahrplattform (14), einen Kreuztisch (16), eine vertikal verstellbare Hubvorrichtung (19), eine an der Hubvorrichtung (19) angeordnete Werkzeugmaschine (20, 22), insbesondere eine Bohrwerkzeugmaschine, und / oder eine an der Hubvorrichtung (19) angeordnete Werkzeugmaschinenaufnahme, und einen Positionsdetektor (28). Sie ermöglicht es, mit sehr hoher Positioniergenauigkeit komfortabel Bodenflächen (12) zu bearbeiten, beispielsweise zu bohren.

## Beschreibung

Die vorliegende Erfindung betrifft einen Bauroboter zum Bearbeiten einer Bodenfläche.

### Stand der Technik

Aus EP3212363A2 ist ein Bauroboter, insbesondere eine robotische mobile Bohrvorrichtung, zum Bohren von Löchern in Decken und Wänden auf einer Baustelle bekannt.

### Offenbarung der Erfindung

Während die bekannte Bohrvorrichtung zum Bohren von Löchern in Decken und Wänden eingerichtet ist, besteht auf Baustellen, beispielsweise auf Hochbaubaustellen oder auf Tiefbaubaustellen, oftmals auch die Aufgabe, eine Vielzahl von Bohrungen in Bodenflächen zu bohren.

Um beispielsweise eine Lagerhalle mit einem im Boden verankerten Regalsystem auszustatten, ist oftmals eine Vielzahl von Bohrungen in regelmäßigen Mustern in den Boden der Lagerhalle zu bohren.

Dabei kommt es besonders darauf an, dass relative Abstände zwischen den Bohrungen und deren relative Lagen zueinander möglichst präzise mit entsprechenden Vorgaben übereinstimmen. Schon geringe Abweichungen von den Vorgaben, beispielsweise im Bereich von wenigen Millimetern oder wenigen Zentimetern, können dazu führen, dass das Regalsystem nicht mehr wie vorgesehen montiert werden kann. Dadurch können erhebliche, kostenträchtige Nacharbeiten erforderlich werden.

Wünschenswert ist es, wenn die Bohrungen nicht nur präzise, sondern darüber hinaus auch kostengünstig und komfortabel gebohrt werden können.

Aufgabe der vorliegenden Erfindung ist es daher, einen Bauroboter zum Bearbeiten einer Bodenfläche anzubieten, der eine besonders präzise Ausführung von Bauarbeiten ermöglicht.

Gelöst wird die Aufgabe durch einen Bauroboter zum Bearbeiten einer Bodenfläche, umfassend eine motorisch antreibbare Fahrplattform, einen Kreuztisch, eine vertikal verstellbare Hubvorrichtung, eine an der Hubvorrichtung angeordnete Werkzeugmaschine und / oder eine an der Hubvorrichtung angeordnete Werkzeugmaschinenaufnahme und ein Positionsdetektor.

### Alternativ oder ergänzend zur Werkzeugmaschine kann die

Werkzeugmaschinenaufnahme eine Werkzeugmaschine zur Bodenbearbeitung aufnehmen, sodass die Werkzeugmaschine auch gewechselt werden kann. Dadurch kann der Bauroboter multifunktional ausgebildet sein.

Allgemein kann der Bauroboter zum Bohren, zum Trennen, beispielsweise zum Sägen oder Fräsen, und / oder zur Oberflächenbearbeitung, beispielsweise zum Schleifen und / oder Polieren, ausgebildet sein. Dazu kann die Werkzeugmaschine entsprechend der jeweils zu erfüllenden Aufgabe geeignet ausgebildet und / oder ausgewählt sein. Für einen zum Bohren von Bohrlöchern eingerichteten Bauroboter kann die Werkzeugmaschine beispielsweise als Bohrmaschine ausgebildet sein.

Ein Gedanke der Erfindung ist dabei, eine grobe Positionierung des Bauroboters durch die Fahrplattform zu ermöglichen. Mithilfe des Kreuztisches können die Werkzeugmaschine und / oder ihr Werkzeug anschließend feinpositioniert werden. Eine vom Werkzeug, beispielsweise einem Bohrwerkzeug, anzufahrende Arbeitsposition kann dadurch beispielsweise mit einer Genauigkeit von weniger als 1 cm und insbesondere von weniger als 1 mm erreicht werden.

Der von dem Kreuztisch abzudeckende Arbeitsbereich kann klein gehalten werden, da größere Verlagerungen des Bauroboters durch die Fahrplattform erfolgen können. Dadurch kann der Kreuztisch kostengünstig gestaltet werden. Auch die Fahrplattform kann kostengünstig gestaltet sein, da sie dank der Korrekturmöglichkeiten mithilfe des Kreuztisches Positionen lediglich mit geringer Genauigkeit anzufahren braucht. Ihre Rangiermöglichkeiten können auf wenige Freiheitsgrade beschränkt sein.

Auch können Arbeitspositionen komfortabel angefahren oder erreicht werden, da die Fahrplattform lediglich grob rangiert und positioniert werden braucht und somit lediglich ein geringer Aufwand zum Steuern der Fahrplattform erforderlich ist.

Insgesamt ermöglicht der Bauroboter, Bauarbeiten, beispielsweise Bohrarbeiten, mit hoher Präzision kostengünstig und komfortabel auszuführen.

Der Positionsdetektor kann einen Zeilensensor und / oder einen Matrixsensor aufweisen. Dann kann der Bauroboter mithilfe eines Lichtsignals, beispielsweise entlang eines Laserstrahls, geführt werden. Dadurch, dass ein solcher Positionsdetektor in der Horizontalen und / oder in der Vertikalen eine große Ausdehnung aufweisen kann, kann das Lichtsignal selbst dann noch erkannt werden, wenn es auf dem Positionsdetektor nicht zentral auftrifft. In einer Ausgestaltung positioniert sich der Bauroboter grob bzw. fährt der Bauroboter grob entlang eines Lichtsignals. Beispielsweise bei Verwendung des Positionsdetektors reicht es aus, dass das Lichtsignal vom Positionsdetektor erfasst wird, damit der Bauroboter zum einen erkennt, dass er sich entlang des Lichtsignals bewegt. Zum anderen erkennt Bauroboter beim Verfahren, ob Korrekturen erforderlich sind, um seinen Fahrtweg einzustellen. Ist der Bauroboter eine vorgegebene Distanz entlang des Lichtsignals verfahren und hat der Bauroboter dann relativ grob eine spezifische lokale Position für den nächsten Arbeitsvorgang, wie z. B. Bohren erreicht, erfolgt eine Feinjustage des Werkzeugs mittels der Kreuztisches. Dabei wird ein Versatz am Positionsdetektor zwischen dem aktuellen Auftreffbereich des Lichtsignals zu einem Nullpunkt am Positionsdetektor ermittelt. Der Bauroboter bewegt entsprechend des Versatzes die Werkzeugmaschine bzw. das Werkzeug, so dass der Versatz ausgeglichen ist. Somit wird der Arbeitsablauf des Bauroboters optimiert. In einer Ausgestaltung kann vorgesehen sein, dass beide Schritte, nämlich das Bewegen des Bauroboters entlang eines Lichtsignals und die Feinjustage zeitgleich ausgeführt werden.

Ein solcher Positionsdetektor kann es auch ermöglichen, eine Position relativ zum Lichtsignal mit besonders hoher Präzision zu messen.

Alternativ oder ergänzend kann der Positionsdetektor einen Reflektor, insbesondere ein Reflexionsprisma, umfassen. Dann kann die Position des Positionsdetektors beispielsweise mithilfe einer externen Totalstation besonders präzise und / oder dreidimensional lokalisiert werden. Auch auf diese Weise lässt sich die Position des Bauroboters und insbesondere des Werkzeugs besonders präzise bestimmen.

Um Messfehler zu minimieren, kann der Positionsdetektor an der Hubvorrichtung und / oder an der Werkzeugmaschine angeordnet sein.

Positionierfehler lassen sich auch vermeiden oder zumindest weiter reduzieren, wenn die Werkzeugmaschine, insbesondere ihr Werkzeug, vertikal nach unten ausgerichtet ist.

Zur Bearbeitung typischer Böden, beispielsweise im Rohbau, kann die Werkzeugmaschine, insbesondere ihr Werkzeug, zur Bearbeitung von Gestein, beispielsweise von Beton, eingerichtet sein.

Denkbar ist auch, dass die Werkzeugmaschine, insbesondere ihr Werkzeug, zur Bearbeitung von Metall, insbesondere von Eisen oder Stahl, eingerichtet ist. Somit kann der Bauroboter, wie auch vorangehend beschrieben, zur effizienten Bearbeitung von, beispielsweise armierten, Beton eingerichtet sein.

Der Bauroboter kann einen Werkzeugwechsler aufweisen. Der Werkzeugwechsler kann eine Werkzeugablage mit einer Vielzahl von Werkzeugen aufweisen. Der Werkzeugwechsler kann auch eine Wechselvorrichtung zum Wechseln des Werkzeugs der Werkzeugmaschine aufweisen. So kann der Bauroboter eingerichtet sein, mit unterschiedlichen Werkzeugen und insbesondere mit unterschiedlichen Arten von Werkzeugen Bauarbeiten auszuführen. Beispielsweise ist denkbar, dass der Bauroboter an einer Arbeitsposition zunächst mit einem Gesteinsbohrer in den Boden bohrt, um in Gestein, beispielsweise Beton, zu dringen. Stößt das Werkzeug auf Metall, so kann das Werkzeug gewechselt werden. Beispielsweise kann ein Stahlbohrer gewählt werden. Mit dem Stahlbohrer kann dann das Metall durchbohrt werden. Anschließend kann wieder auf den ursprünglichen Gesteinsbohrer zurück gewechselt werden und unter dem Metall liegendes Gestein weiter gebohrt werden, bis eine gewünschte Bohrlochtiefe erreicht ist. Weiterhin können Bohrer unterschiedlichen Durchmessers vorgehalten werden und selektiv mittels des Werkzeugwechslers in Einsatz gebracht werden.

### Denkbar ist auch, dass der Bauroboter wenigstens zwei

Werkzeugmaschinenaufnahmen und / oder wenigstens zwei Werkzeugmaschinen umfasst. Eine der Werkzeugmaschinen kann zur Bearbeitung von Gestein, beispielsweise durch einen Gesteinsbohrer, eingerichtet sein. Eine andere der Werkzeugmaschinen kann zur Bearbeitung von Metall eingerichtet sein. So kann besonders effizient, insbesondere ohne an einer der Werkzeugmaschinen ein Werkzeug wechseln zu müssen, auch armierter Beton bearbeitet werden.

Somit ist es auch möglich, Böden besonders effizient zu bearbeiten, die aus mehreren, verschiedenen Materialien ausgebildet sind.

Dabei ist es besonders günstig, wenn der Bauroboter eingerichtet ist, eine der wenigstens zwei Werkzeugmaschinen in Abhängigkeit von einem zu bearbeitenden Material auszuwählen. Denkbar ist beispielsweise, dass der Bauroboter einen Sensor zur Materialdetektion umfasst. Je nach detektiertem Material kann der Bauroboter dann die Werkzeugmaschine mit dem geeigneten Werkzeug auswählen und an der Arbeitsposition die gewünschte Bauarbeit ausführen bzw. fortsetzen.

Die Materialdetektion kann beispielsweise durch Erfassen von Vibrationen, akustisch und / oder optisch und / oder durch Messen des Arbeitsfortschritts, beispielsweise einer Bohrgeschwindigkeit, erfolgen.

Besonders vorteilhaft ist es, wenn der Bauroboter eingerichtet ist, das Werkzeug der Werkzeugmaschine mit einer Genauigkeit von 1 mm oder besser zu positionieren und besonders bevorzugt auch mit einer entsprechenden Genauigkeit Bauarbeiten, beispielsweise Bohrlöcher bohren, ausführen kann. Insbesondere kann ein maximaler Abstand der tatsächlichen Arbeitsposition, beispielsweise der tatsächlichen Position eines Bohrlochs, von einer Soll-Position höchstens 1 mm betragen. Denkbar ist, die Abweichung auf eine Maximaldistanz, insbesondere gemessen von einem Bezugspunkt aus, zu beziehen. Beispielsweise ist es denkbar, dass der Bauroboter eingerichtet ist, eine Genauigkeit von 1 mm bei Abständen von bis zu 50 m, insbesondere von bis zu 100 m, von einem Referenzpunkt einzuhalten.

Dann können auch große Einrichtungen, beispielsweise große Regalsysteme, mit hinreichender Genauigkeit effizient installiert werden.

Der Bauroboter kann wenigstens einen Lagesensor aufweisen. Der Lagesensor kann eine Inertialmesseinheit, im Folgenden: IMU, umfassen. Er kann an der Werkzeugmaschine und / oder an der Hubvorrichtung und / oder an der Werkzeugmaschinenaufnahme angeordnet sein. Vorzugsweise ist er starr am jeweiligen Element des Bauroboters angeordnet.

Durch den Lagesensor kann beispielsweise eine Neigung der Hubvorrichtung gemessen werden. Die Neigung, beispielsweise gegen die Vertikale, kann zur Korrektur der Position des Werkzeugs verwendet werden, um auf diese Weise eine noch bessere Genauigkeit zu erzielen.

Die Fahrplattform kann wenigstens drei Räder aufweisen. Damit sie besonders kostengünstig ausgebildet sein kann, können wenigstens zwei der Räder als unidirektionale Räder ausgebildet sein. Sie können an einer starren, nicht lenkbaren Achse angeordnet sein.

Die Fahrplattform kann auch wenigstens ein omnidirektionales Rad und / oder ein lenkbares Rad umfassen.

Um beispielsweise Bohrungen in regelmäßigen Abständen bohren zu können, kann der Bauroboter einen Distanzmesser aufweisen. Der Distanzmesser kann eingerichtet sein, eine Distanz zu einem Bezugspunkt, beispielsweise einer zumindest temporär ortsfesten Lichtquelle und / oder einer ortsfesten Markierung, zu messen. Alternativ oder zusätzlich ist eine Logge, beispielswiese ein Entfernungsmesser mittels gefahrenen

In den Rahmen der Erfindung fällt des Weiteren ein Baurobotersystem, das einen Bauroboter der vorangehend beschriebenen Art sowie einen Linienlaser umfasst.

Das Baurobotersystem ermöglicht auf einfache Weise Bohrungen entlang einer Linie.

Der Linienlaser kann auch ein Rotationslaser sein.

Das System kann dadurch auf besonders einfache Weise die Möglichkeit bieten, eine Vielzahl von Bohrungen oder allgemein einer Vielzahl von Bauarbeiten entlang dem Laserstrahl des Linienlasers bohren bzw. ausführen.

Aufgrund der einfachen Platzierung des Linienlasers beispielsweise auf einer Baustelle, kann so die Vielzahl von Bauarbeiten besonders einfach und komfortabel ausgeführt werden.

Der Bauroboter kann als semiautonomer oder vollautonomer Bauroboter ausgebildet sein. Als semiautonomer Bauroboter kann seine Fahrplattform fernbedienbar ausgebildet sein. Dadurch kann sichergestellt sein, dass ein Benutzer des Bauroboters größere Bewegungen manuell steuert und damit auch überwacht. Der semiautonome Bauroboter kann eingerichtet sein, selbsttätig Feinpositionierungen und / oder Bohrvorgänge insbesondere durch selbsttätige Steuerung des Kreuztisches und / oder der Hubvorrichtung durchzuführen.

Ein vollautonomer Bauroboter kann darüber hinaus eingerichtet sein, auch größere Bewegungen, insbesondere mit Hilfe der Fahrplattform selbsttätig zu steuern und auszuführen.

Dazu können der semiautonome und / oder der vollautonome Bauroboter zusätzliche Sensorik und Steuerlogik aufweisen. Die Sensorik kann beispielsweise zusätzliche 2D- oder 3D-Kameras und / oder Entfernungsmesser umfassen. Sie kann auch zusätzliche und / oder alternative Positionsdetektoren umfassen, beispielsweise zur Lokalisation des Bauroboters unabhängig von dem Linienlaser. Denkbar ist auch, dass der Linienlaser motorisch verlagerbar ist, sodass der Linienlaser sich selbsttätig und / oder ferngesteuert auf eine weitere Referenzposition bewegen kann.

Weitere Merkmale und Vorteile der Erfindung ergeben sich aus der nachfolgenden detaillierten Beschreibung eines Ausführungsbeispiels der Erfindung anhand der Figuren der Zeichnung, die erfindungswesentliche Einzelheiten zeigen, sowie aus den Ansprüchen.

Die einzelnen Merkmale können je einzeln für sich oder zu mehreren in beliebigen Kombinationen bei Varianten der Erfindung verwirklicht sein. In der schematischen Zeichnung sind Ausführungsbeispiele der Erfindung dargestellt, welche in der nachfolgenden Beschreibung näher erläutert werden.

### Kurze Beschreibung der Zeichnungen

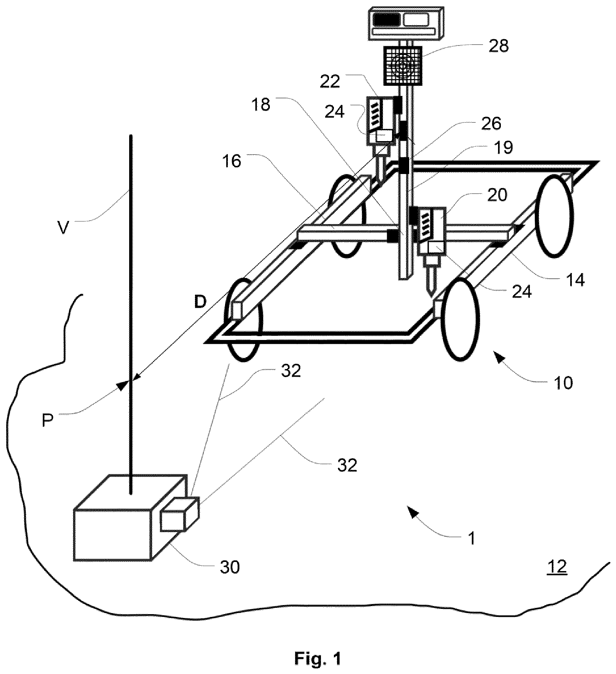

Die einzige Fig. 1 zeigt ein Baurobotersystem mit einem Bauroboter und einem Linienlaser.

### Ausführungsformen der Erfindung

Fig. 1 zeigt ein Baurobotersystem 1. Das Baurobotersystem 1 umfasst einen Bauroboter 10 zum Bearbeiten einer Bodenfläche 12. Die Bodenfläche 12 ist aus armiertem Beton gebildet.

Der Bauroboter 10 umfasst eine motorische antreibbare Fahrplattform 14. An der Fahrplattform 14 ist ein Kreuztisch 16 angeordnet.

Der Kreuztisch 16 ist, beispielsweise mithilfe von zwei zueinander orthogonal ausgerichteten Linearantrieben, eingerichtet, ein Stellglied 18 in einer zur Bodenfläche 12 parallelen oder zumindest im Wesentlichen parallelen Ebene mit hoher Genauigkeit, beispielsweise mit einer Genauigkeit von besser als 0,5 mm, innerhalb seines Arbeitsbereichs zu positionieren.

Der Kreuztisch 16 weist an seinem Stellglied 18 eine Hubvorrichtung 19 auf.

An der Hubvorrichtung 19 sind zwei Werkzeugmaschinen 20 und 22 vertikal motorisch verschiebbar angeordnet. Dabei ist die Hubvorrichtung 19 eingerichtet, die beiden Werkzeugmaschinen 20, 22 individuell steuerbar abzusenken oder anzuheben.

Beide Werkzeugmaschinen 20, 22 sind als Bohrmaschinen ausgebildet. Die Werkzeugmaschine 20 ist als Gesteinsbohrmaschine ausgebildet, insbesondere ist sie als Bohrhammermaschine ausgebildet und / oder ist zumindest eingerichtet, in einem Bohrhammer-Modus betrieben zu werden. Die Werkzeugmaschine 20 ist mit einem Gesteinsbohrer, beispielsweise einem mit einer Hartmetallspitze versehenen Gesteinsbohrer, ausgestattet.

Die Werkzeugmaschine 22 ist zum Bohren von eisenhaltigen Metallen und Legierungen eingerichtet. Sie ist mit einem Stahlbohrer ausgestattet.

Die Werkzeugmaschinen 20, 22 umfassen ferner Materialdetektoren 24. Die Materialdetektoren 24 erfassen Vibrationen der jeweiligen Werkzeugmaschine 20 bzw. 22. Zudem erfassen die Materialdetektoren 24 jeweils eine momentane Bohrgeschwindigkeit der jeweiligen Werkzeugmaschine 20 bzw. 22. Aus diesen Messdaten ermitteln die Materialdetektoren 24, ob die jeweilige Werkzeugmaschine 20, 22 Gestein oder ein anderes Material, beispielsweise Eisen oder Stahl, beispielsweise einer Armierung, bearbeitet.

Der Bauroboter 10 ist eingerichtet, dass, wenn einer der Materialdetektoren 24 detektiert, dass die ihm zugeordnete Werkzeugmaschine 20 bzw. 22 ein für diese Werkzeugmaschine 20 bzw. 22 ungeeignetes Material bearbeitet, die betreffende Werkzeugmaschine 20 bzw. 22 von der Arbeitsposition weggeführt wird und die andere der Werkzeugmaschinen 20 bzw. 22 an die Arbeitsposition gebracht wird, um die Bauarbeit, beispielsweise die Bohrung, fortzusetzen.

Wird nacheinander detektiert, dass beide Werkzeugmaschinen 20 bzw. 22 ungeeignet sind, kann der Bauroboter 10 eingerichtet sein, die Bauarbeit abzubrechen und beispielsweise an einen, in Fig. 1 nicht dargestellten, Benutzer des Bauroboters 10 ein entsprechendes Hinweissignal zusenden.

An der Hubvorrichtung 19 ist des Weiteren ein Lagesensor 26 angeordnet. Der Lagesensor 26 umfasst eine IMU. Der Lagesensor 26 ist insbesondere eingerichtet, eine Ausrichtung der Hubvorrichtung 19, insbesondere einen von der Vertikalen abweichenden Neigungswinkel, zu detektieren. Des Weiteren ist an der Hubvorrichtung 19 ein Positionsdetektor 28 angeordnet. Der Positionsdetektor 28 weist einen Matrixsensor auf. Der Matrixsensor kann beispielsweise eine Größe von 10 cm X 10 cm aufweisen. Seine Pixelauflösung in horizontaler als auch vertikaler Richtung kann beispielsweise mindestens 100 dpi betragen.

Das Baurobotersystem 1 weist ferner einen Linienlaser 30 auf. Der Linienlaser 30 ist als Rotationslaser ausgebildet. Wie in Fig. 1 zu erkennen ist, strahlt der Linienlaser 30 einen in einer vertikalen Ebene rotierenden Laserstrahl 32 aus. In Fig. 1 ist die Rotation des Laserstrahls 32 schematisch durch zwei verschieden ausgerichtete einzelne Strahlen des Laserstrahls 32 dargestellt.

In der in Fig. 1 dargestellten Situation trifft der Laserstrahl 32 bereits auf dem Positionsdetektor 28 auf. Der Bauroboter 10 ist eingerichtet, den Kreuztisch 16 so zu steuern, dass der Laserstrahl 32 auf einem vorbestimmten Punkt, beispielsweise einem Mittelpunkt des Positionsdetektors 28 auftrifft.

Denkbar ist, dass der Positionsdetektor, insbesondere wenn er wie im vorliegenden Ausführungsbeispiel einen Matrixsensor umfasst, in Verbindung mit dem vertikal rotierenden Rotationslaser auch zur Detektion einer Neigung gegenüber der Vertikalen eingerichtet ist. Insofern kann der Positionsdetektor 28 die Funktionalität des Lagesensors 26 ergänzen oder, zumindest teilweise, ersetzen.

Mit einem ebenfalls an der Hubvorrichtung 19 angeordneten Distanzmesser 34 kann der Bauroboter 10 seine Distanz D zu einem Bezugspunkt P oder einer Bezugslinie, im Ausführungsbeispiel gemäß Fig. 1 beispielsweise einer Vertikalen V über dem Linienlaser 30, und somit seine horizontale Distanz zum Linienlaser 30, messen. Der Bauroboter 10 positioniert sich mit Hilfe des Kreuztisches 16 und gegebenenfalls mit Hilfe der Fahrplattform 12 derart, dass der Laserstrahl 32 auf den vorbestimmten Punkt des Positionsdetektors 28 trifft und die Distanz D zu dem Bezugspunkt P einer vorbestimmten Distanz entspricht. Sobald der Bauroboter 10 sich entsprechend eingestellt hat, kann er die zum Bohren von Gestein geeignete Werkzeugmaschine 20 bzw. 22 absenken und einen Bohrvorgang starten, um in die Bodenfläche 12 zu bohren. Bei Bedarf kann der Bauroboter 10 die Werkzeugmaschine 20 bzw. 22 wechseln, um beispielsweise durch eine Armierung zu bohren.

Nach Abschluss eines Bohrvorganges kann der Bauroboter 10 zu einer nächsten aufzusuchenden und zu bearbeitenden Arbeitsposition fahren. Je nach Distanz zwischen den Arbeitspositionen kann er dazu nur den Kreuztisch 16 verstellen oder aber sich insgesamt mithilfe der Fahrplattform 14 verlagern und eine neue Feinpositionierung mithilfe des Kreuztisch 16 bewerkstelligen. Die Verlagerungen können dabei jeweils unter Kontrolle des Auftreffpunktes des Laserstrahls 32 auf dem Positionsdetektor 28 sowie unter Kontrolle der Distanz D entsprechend der aufzusuchenden nächsten Arbeitsposition erfolgen.

### Bezugszeichenliste

- 1: Baurobotersystem
- 10: Bauroboter
- 12: Bodenfläche
- 14: Fahrplattform
- 16: Kreuztisch
- 18: Stellglied
- 19: Hubvorrichtung
- 20: Werkzeugmaschine
- 22: Werkzeugmaschine
- 24: Materialdetektor
- 26: Lagesensor
- 28: Positionsdetektor
- 30: Linienlaser
- 32: Laserstrahl
- 34: Distanzmesser
- D: Distanz
- P: Bezugspunkt
- V: Vertikale

## Patentansprüche

1. Bauroboter (10) zum Bearbeiten einer Bodenfläche (12), umfassend
- eine motorisch antreibbare Fahrplattform (14),
- einen Kreuztisch (16),
- eine vertikal verstellbare Hubvorrichtung (19),
- eine an der Hubvorrichtung (19) angeordnete Werkzeugmaschine (20, 22), insbesondere eine Bohrwerkzeugmaschine, und / oder eine an der Hubvorrichtung (19) angeordnete Werkzeugmaschinenaufnahme, und
- einen Positionsdetektor (28).

2. Bauroboter (10) nach dem vorhergehenden Patentanspruch, **dadurch gekennzeichnet, dass** der Positionsdetektor (28) einen optischen Zeilensensor und / oder einen optischen Matrixsensor aufweist.

3. Bauroboter (10) nach einem der vorhergehenden Patentansprüche, **dadurch gekennzeichnet, dass** der Positionsdetektor (28) einen Reflektor, insbesondere ein Reflexionsprisma, umfasst.

4. Bauroboter (10) nach einem der vorhergehenden Patentansprüche, **dadurch gekennzeichnet, dass** der Positionsdetektor (28) an der Hubvorrichtung (19) und / oder an der Werkzeugmaschine (20, 22) angeordnet ist.

5. Bauroboter (10) nach einem der vorhergehenden Patentansprüche, **dadurch gekennzeichnet, dass** die Werkzeugmaschine (20, 22), insbesondere ihr Werkzeug, vertikal nach unten ausgerichtet ist.

6. Bauroboter (10) nach einem der vorhergehenden Patentansprüche, **dadurch gekennzeichnet, dass** der Bauroboter (10) einen Werkzeugwechsler aufweist.

7. Bauroboter (10) nach einem der vorhergehenden Patentansprüche, **dadurch gekennzeichnet, dass** die Werkzeugmaschine (20, 22) zur Bearbeitung von Gestein, beispielsweise Beton, eingerichtet ist.

8. Bauroboter (10) nach einem der vorhergehenden Patentansprüche, **dadurch gekennzeichnet, dass** die Werkzeugmaschine (20, 22) zur Bearbeitung von Metall, insbesondere Eisen oder Stahl, eingerichtet ist.

9. Bauroboter (10) nach einem der vorhergehenden Patentansprüche, **dadurch gekennzeichnet, dass** der Bauroboter (10) wenigstens zwei Werkzeugmaschinenaufnahmen und / oder wenigstens zwei Werkzeugmaschinen (20, 22) umfasst.

10. Bauroboter (10) nach einem der vorhergehenden Patentansprüche, **dadurch gekennzeichnet, dass** der Bauroboter (10) eingerichtet ist, eine der beiden Werkzeugmaschinen (20, 22) in Abhängigkeit von einem zu bearbeitenden Material auszuwählen.

11. Bauroboter (10) nach einem der vorhergehenden Patentansprüche, **dadurch gekennzeichnet, dass** der Bauroboter (10) eingerichtet ist, das Werkzeug der Werkzeugmaschine (20, 22) mit einer Genauigkeit von 1 mm oder besser zu positionieren.

12. Bauroboter (10) nach einem der vorhergehenden Patentansprüche, **dadurch gekennzeichnet, dass** der Bauroboter (10) wenigstens einen Lagesensor (26) aufweist.

13. Bauroboter (10) nach einem der vorhergehenden Patentansprüche, **dadurch gekennzeichnet, dass** die Fahrplattform (14) wenigstens drei Räder aufweist, von denen wenigstens zwei Räder als unidirektionale Räder ausgebildet sind.

14. Baurobotersystem (1), umfassend einen Bauroboter (10) nach einem der vorhergehenden Patentansprüche und einen Linienlaser (30).
